# EUROPEAN PATENT APPLICATION

(11) **EP 4 668 543 A1**
(43) Date of publication of application: **24.12.2025**
(21) Application number: 25179669.4
(22) Date of filing: 29.05.2025
(51) Int. Cl.: H02K 1/20, H02K 3/24, H02K 5/20, H02K 9/19

(54) **WATER-COOLED STATOR STRUCTURE OF AXIAL FLUX MOTOR**

(30) Priority: 17.06.2024 US 202463660579 P; 22.01.2025 CN 202510099864
(71) Applicant: Delta Electronics, Inc., Taoyuan City 333 (TW)
(72) Inventor: CHEN, Yi-No, Taoyuan City 333 (TW); HSU, Tzu-Ting, Taoyuan City 333 (TW)
(74) Representative: Riccardi, Elisa

(57) **Abstract**

A water-cooled stator structure of an axial flux motor (100) includes a stator body (110), a cooling water pipe, an internal connection water channel structure, an external connection water channel structure, and thermoset insulation material. A plurality of conductor wires (120) pass through the plurality of slots of the stator body in the radial direction to form a distributed winding. Cooling water pipes are made of waterproof non-magnetic material, and passed through the stator body in the radial direction, and are located between an internal space and an outer diameter sidewall of the stator body. The internal connection water channel structure (190) and the external connection water channel structure (170) are connected to both ends of the cooling water pipes. The thermoset insulation material (144) is filled among inner and outer diameter protrusions of the conductor wires, the internal connection water channel structure and external connection water channel structure.

## Description

### BACKGROUND

### Field of Disclosure

The present disclosure relates to a water-cooled stator structure, and more particularly to a water-cooled stator structure of an axial flux motor.

### Description of Related Art

A conventional stator comprises two annular plates and two cylindrical walls forming an annular housing. The coil is arranged in the housing. The housing is provided with an inlet and an outlet for a coolant. The coolant flows back and forth among through the gaps of the inner and outer diameters of the coils.

One of the disadvantages of the conventional stator is that it can only be applied to stators with the concentrated winding structure. Stators with the distributed winding do not have gaps between windings and cannot utilize such cooling mechanism. The second disadvantage of the conventional stator is that since the coolant directly contacts the winding, if a water-containing or conductive coolant is used, it may not only cause a short circuit between the conductors, but also have a negative impact on the insulating material it contacts, resulting in damages to the insulation.

### SUMMARY

The present disclosure provides a water-cooled stator structure of an axial flux motor to deal with the needs of the prior art problems.

In one or more embodiments, a water-cooled stator structure of an axial flux motor includes a hollow-annular-shaped stator body having a plurality of slots; a plurality of conductor wires passing through the slots in a radial direction to form a distributed winding structure, and having a plurality of inner diameter protrusions and a plurality of outer diameter protrusions, wherein the inner diameter protrusions are located in an internal space of the stator body, and the outer diameter protrusions are exposed outside an outer diameter sidewall of the stator body; a plurality of cooling water pipes made from a waterproof non-magnetic material and passing through the stator body in the radial direction, and being located between the internal space and the outer diameter sidewall; an internal connection water channel structure fluidly-communicably connected with the cooling water pipes and having an internal fluid-sealed structure contacting ends of the cooling water pipes; an external connection water channel structure fluidly-communicably connected with and having an external fluid-sealed structure contacting the other ends of the cooling water pipes; and a thermoset insulating material filled among the inner diameter protrusions, the outer diameter protrusions, the internal connection water channel structure and the external connection water channel structure.

In one or more embodiments, the stator body is a soft magnetic material body, and the cooling water pipes pass through the stator body in a radial manner.

In one or more embodiments, the internal connection water channel structure comprises an inner upper ring and an inner lower ring which are attached to form a plurality of radially arranged internal connection water channels to be fluidly-communicably connected with the ends of the cooling water pipes respectively.

In one or more embodiments, the internal fluid-sealed structure is located between the stator body and the internal connection water channel structure.

In one or more embodiments, the external connection water channel structure comprises an outer upper ring and an outer lower ring that are attached to form a plurality of radially arranged external connection water channels to be fluidly-communicably connected with the other ends of the cooling water pipes respectively.

In one or more embodiments, the external fluid-sealed structure is located between the stator body and the external connection water channel structure.

In one or more embodiments, the external fluid-sealed structure or the internal fluid-sealed structure an elastic polymer material or an elastic colloid material.

In one or more embodiments, the external connection water channel structure comprises a plurality of cone-shaped protruding members arranged in a circumferential direction.

In one or more embodiments, each cone-shaped protruding member is located between every two immediately-adjacent ones of the inner diameter protrusions.

In one or more embodiments, the water-cooled stator structure further includes an inner cooling water channel structure located in the internal space of the stator body, wherein the inner diameter protrusions are located between the stator body and the inner cooling water channel structure; and an outer cooling water channel structure surrounding the outer diameter sidewall of the stator body, wherein the outer diameter protrusions are located between the stator body and the outer cooling water channel structure.

In one or more embodiments, the thermoset insulating material is further filled among the stator body, the outer cooling water channel structure and the outer diameter protrusions.

In one or more embodiments, the thermoset insulating material is further filled between the stator body, the inner cooling water channel structure and the inner diameter protrusions.

In one or more embodiments, the inner cooling water channel structure comprises two inner annular water channel walls which are attached to each other to form an inner cooling water channel between the two inner annular water channel walls.

In one or more embodiments, the inner annular water channel wall adjacent to the stator body has a plurality of concave-convex features, and the thermoset insulating material is filled between the stator body, the inner diameter protrusions, the inner annular water channel wall and the concave-convex features.

In one or more embodiments, the outer cooling water channel structure comprises two outer annular water channel walls which are attached to each other to form an outer cooling water channel between the two outer annular water channel walls.

In sum, the water-cooled stator structure of the axial flux motor disclosed herein adopts non-magnetic material that can prevent water from leaking as a cooling water pipe, which is used to connect the inner and outer cooling water channels of the stator body, so that the cooling water can directly enter the interior of the stator with a higher heat density for heat exchange. The cooling water pipe passes through the soft magnetic material of the stator and can effectively prevent the internal cooling water from leaking out or directly contacting the soft magnetic material. The inner and outer cooling water channel structures and the conductor wires (inner diameter protrusion or outer diameter protrusion) are filled with thermoset insulating materials that flow first and solidify later. In addition to being used to insulate and secure the conductor wires, the thermoset insulating materials can also dissipate the heat from by the conductor wires to the inner and outer cooling water channel structures, thereby achieving the purpose of heat dissipation. The water-cooled stator structure also includes internal and external connection water channel structures and a fluid-sealed structure connected between the internal and external cooling water channel structures and the cooling water pipe to prevent cooling water from leaking out.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 illustrates a perspective view of a water-cooled stator structure of an axial flux motor according to an embodiment of the present disclosure;
Fig. 2 illustrates a cross-sectional view of the water-cooled stator structure in Fig. 1 taken along the section line 2-2;
Fig. 3 illustrates a perspective view of the water-cooled stator structure in Fig. 1 with a part of the outer annular water channel wall removed;
Fig. 4 illustrates a perspective view of the water-cooled stator structure in Fig. 1 with an outer cooling water channel structure removed;
Fig. 5 illustrates a perspective view of the water-cooled stator structure in Fig. 1 with an outer cooling water channel structure and conductor wires removed;
Fig. 6 illustrates a perspective view of the water-cooled stator structure in Fig. 5 with an outer upper ring of an external connection water channel structure removed;
Fig. 7 illustrates a perspective view of the water-cooled stator structure in Fig. 5 with a stator body removed;
Fig. 8 illustrates a perspective view of the water-cooled stator structure in Fig. 7 with an outer upper ring of an external connection water channel structure removed;
Fig. 9 illustrates a perspective view of the water-cooled stator structure in Fig. 7 with an external connection water channel structure removed; and
Fig. 10 illustrates a perspective view of the water-cooled stator structure in Fig. 8 with an inner upper ring of an internal connection water channel structure removed.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

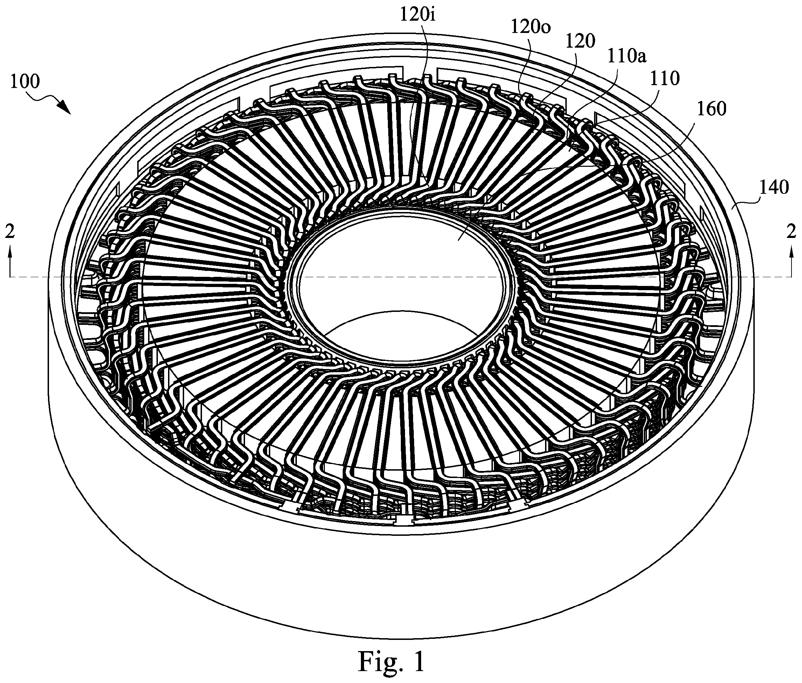

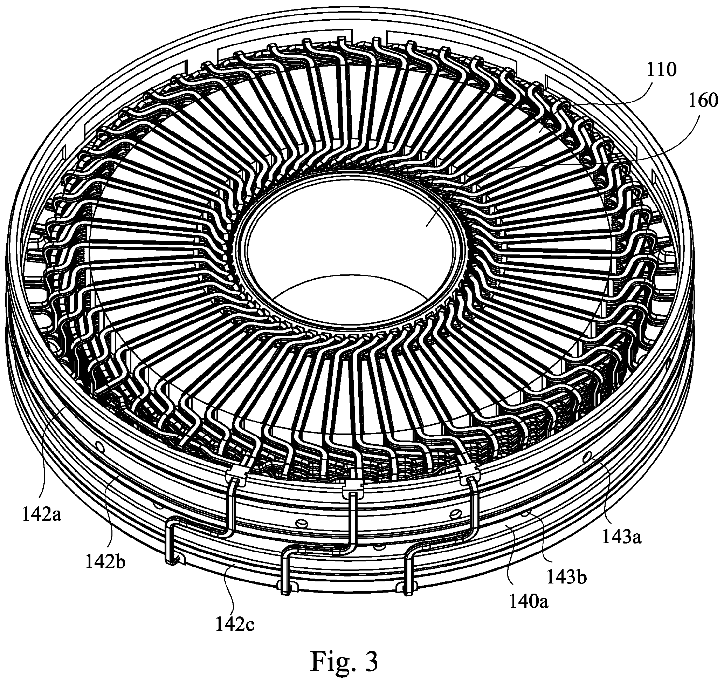

Reference is made to Figs. 1, 2 and 3, the water-cooling stator structure 100 includes a stator body 110, an inner cooling water channel structure 160, an outer cooling water channel structure 140, and the like. The stator body 110 is hollow-annular-shaped and has a plurality of slots 110a extending in a radial direction RD. A plurality of conductor wires 120 pass through the corresponding slots 110a along the radial direction RD respectively to form a distributed winding structure, and have a plurality of inner diameter protrusions 120i and a plurality of outer diameter protrusions 120o. The inner diameter protrusions 120i are located in an internal space of the stator body 110, and the outer diameter protrusions 120o are exposed outside an outer diameter sidewall of the stator body 110. The axial flux motor includes a stator body 110 and a rotor body (not shown). The stator body 110 and the rotor body at least partially overlap in the axial direction AD.

In some embodiments of the present disclosure, an inner cooling water channel structure 160 is located in the internal space of the stator body 110, and the inner diameter protrusions 120i are located between the stator body 110 and the inner cooling water channel structure 160. The inner cooling water channel structure 160 includes two inner annular water channel walls (160a, 160b) bonded together to form an inner cooling water channel 160c therebetween. That is, the inner cooling water channel 160c is formed between the two inner annular water channel walls (160a, 160b). The inner cooling water channel structure 160 further includes a fluid-sealed structure such as O-rings (162a, 162b) clamped between two inner annular water channel walls (160a, 160b) to prevent water leakage. The O-rings (162a, 162b) include an elastic polymer material or an elastic colloid material.

In some embodiments of the present disclosure, the outer cooling water channel structure 140 surrounds the outer diameter sidewall of the stator body 110, wherein the outer diameter protrusions 120o are located between the stator body 110 and the outer cooling water channel structure 140. The outer cooling water channel structure 140 includes two outer annular water channel walls (140a, 140b) bonded together to form an outer cooling water channel 140c therebetween. That is, the outer cooling water channel 140c is formed between the two outer annular water channel walls (140a, 140b). The outer cooling water channel structure 140 further includes a fluid-sealed structure such as O-rings (142a, 142b, 142c) clamped between two outer annular water channel walls (140a, 140b) to prevent water leakage. The O-rings (142a, 142b, 142c) an elastic polymer material or an elastic colloid material.

In some embodiments of the present disclosure, a thermoset insulating material 144 that flows first and then solidifies can be filled between the stator body 110 and the outer cooling water channel structure 140 and located among the outer diameter protrusions 120o, so as to secure the stator body 110, the outer cooling water channel structure 140 and the outer diameter protrusions 120o together and help dissipate heat from the outer diameter protrusions 120o. The thermoset insulating material 144 that flows first and then solidifies can also be filled between the stator body 110 and the inner cooling water channel structure 160 and located among the inner diameter protrusions 120i, so as to secure the stator body 110, the inner cooling water channel structure 160 and the inner diameter protrusions 120i together and help dissipate heat from the inner diameter protrusions 120i. The thermoset insulating material 144 that flows first and then solidifies may also be filled between the conductor wires 120 and the stator body 110 to insulate and secure the conductor wires 120 and help dissipating heat.

In some embodiments of the present disclosure, the stator body 110 may be formed by silicon steel sheets stacked in the radial direction RD or in the axial direction AD, or may be formed by a soft magnetic composite (SMC).

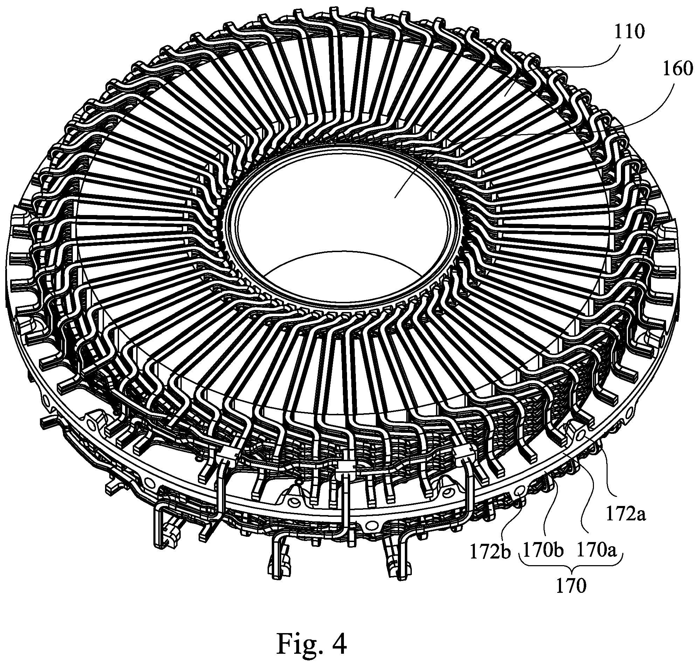

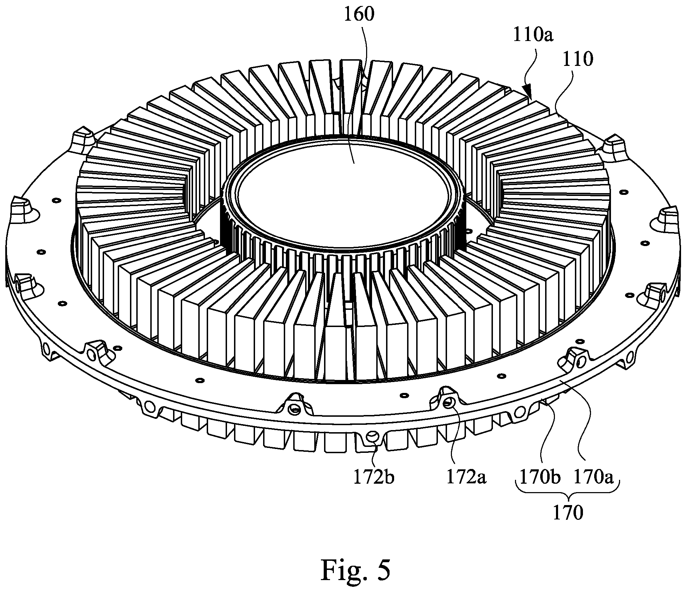

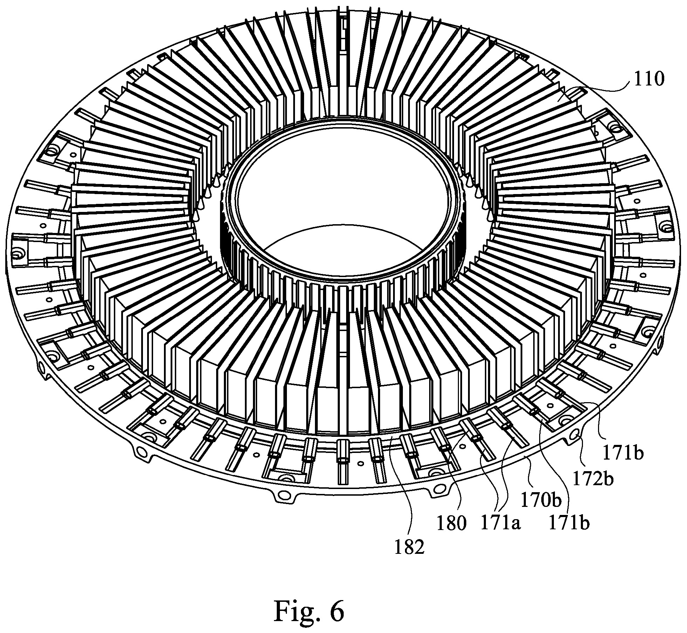

Reference is made to Figs. 4, 5 and 6, an external connection water channel structure 170 is located between the stator body 110 and the outer cooling water channel structure 140, and is configured to be fluidly-communicable between the cooling water pipes 180 and the outer cooling water channel structure 140. The external connection water channel structure 170 has external connection water holes (172a, 172b) to be fluidly-communicably connected to the corresponding through holes (143a, 143b) of the outer cooling water channel structure 140 and the outer cooling water channel 140c respectively. The external connection water channel structure 170 includes an outer upper ring 170a and an outer lower ring 170b. The outer upper ring 170a and the outer lower ring 170b are attached to form a plurality of external connection water channels (171a, 171b) arranged in a radial manner along the circumferential direction and extending in the radial direction RD. Each external connection water channel (171a or 171b) is fluidly-communicably connected to a corresponding cooling water pipe 180. The external connection water channel structure 170 further includes an external fluid-sealed structure 182 contacting ends of the cooling water pipes 180 along the radial direction RD.

In some embodiments of the present disclosure, each external connection water channel (171a or 171b) corresponds to a slot 110a of the stator body 110 in the radial direction RD. In some embodiments of the present disclosure, every two adjacent external connection water channels 171a are fluidly-communicably connected to an external connection water hole 172a, and every two adjacent external connection water channels 171b are fluidly-communicably connected to an external connection water hole 172b.

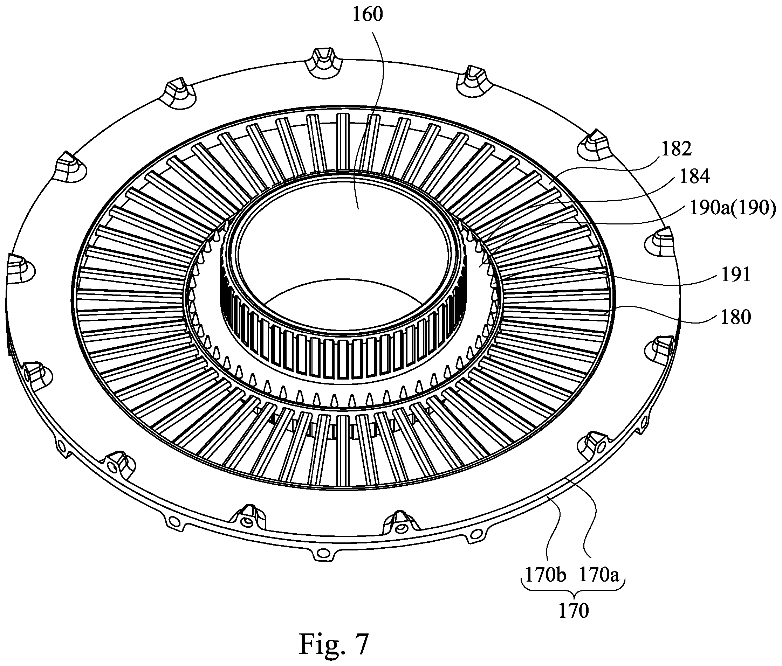

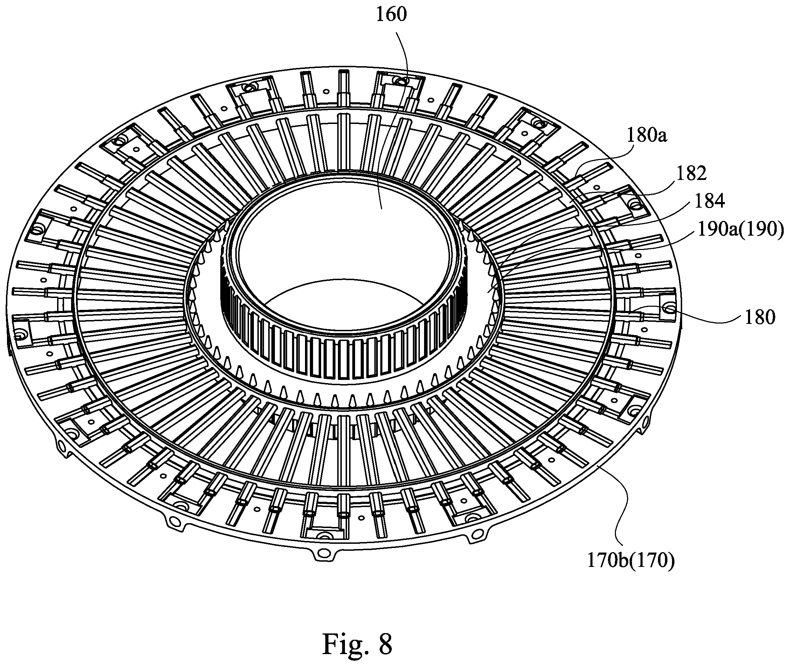

Reference is made to Figs. 7 and 8, in some embodiments of the present disclosure, the plurality of cooling water pipes 180 are made of waterproof non-magnetic material, which can effectively prevent the internal cooling water from leaking out or directly contacting the soft magnetic material of the stator body 110. The cooling water pipes 180 penetrate the stator body 110 in the radial direction RD and are located between the inner cooling water channel structure 160 and the outer cooling water channel structure 140. In some embodiments of the present disclosure, the external fluid-sealed structure 182 is a circular ring structure and is located between the stator body 110 and the external connection water channel structure 170, such as an O-ring. The external fluid-sealed structure 182 includes elastic polymer material or an elastic colloid material. In some embodiments of the present disclosure, the external fluid-sealed structure 182 allows the ends 180a of all cooling water pipes 180 to pass through, and the polymer material or colloid material of the external fluid-sealed structure 182 can closely adhere to the periphery of the ends 180a of the cooling water pipes 180 to prevent water leakage. In some embodiments of the present disclosure, the internal fluid-sealed structure 184 is a circular ring structure and is located between the stator body 110 and the internal connection water channel structure 190, such as an O-ring, which will be described in detail below.

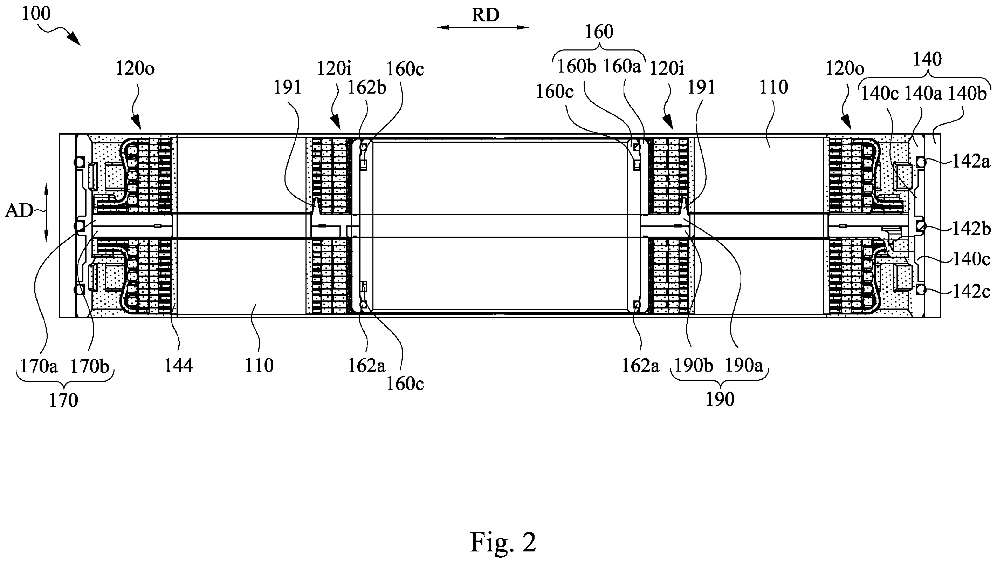

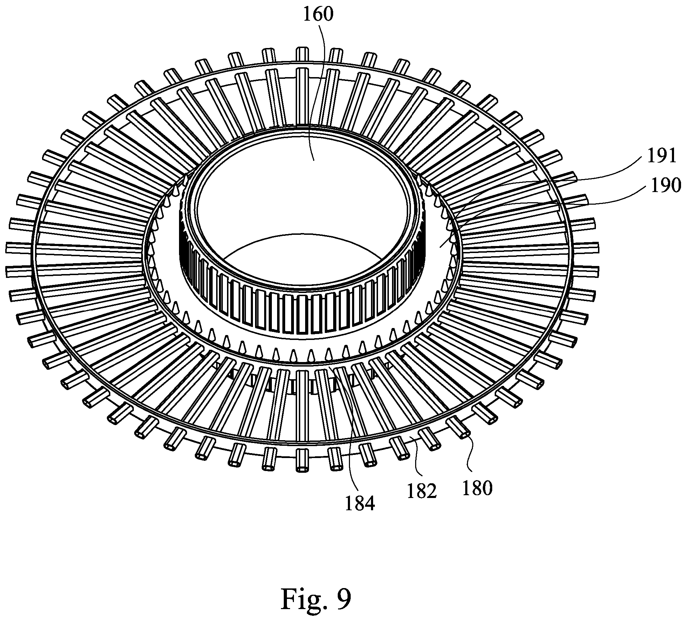

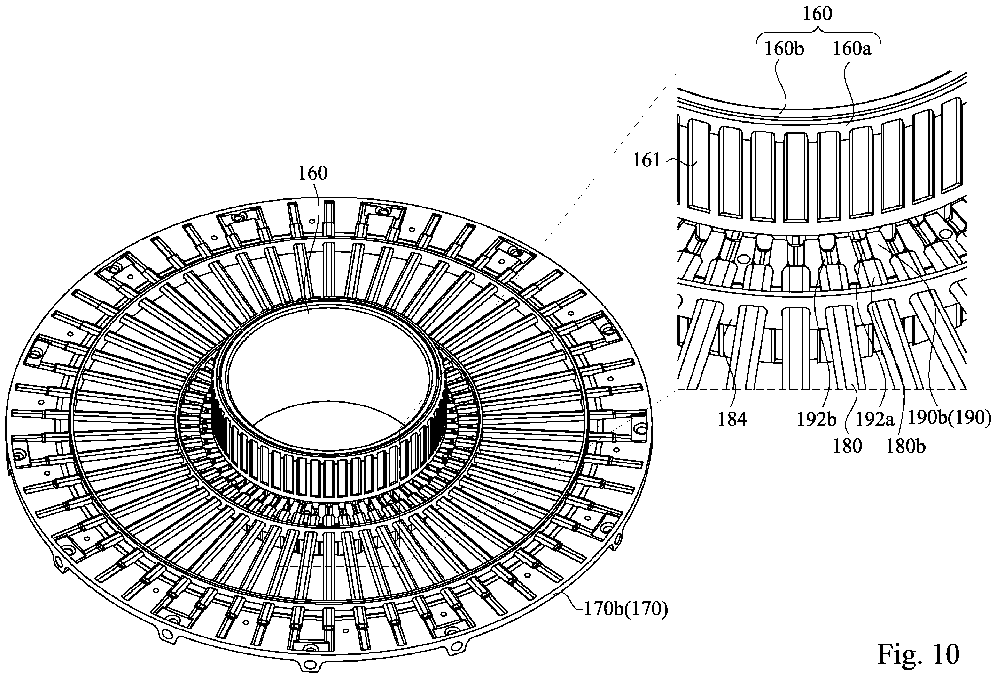

Reference is made to Figs. 9 and 10, in some embodiments of the present disclosure, the internal connection water channel structure 190 includes an inner upper ring 190a and an inner lower ring 190b, and the inner upper ring 190a and the inner lower ring 190b are bonded to form a plurality of internal connection water channels (192a, 192b) arranged in a radial manner along the circumferential direction and extending along the radial direction RD to respectively connect to the other ends 180b of the cooling water pipes 180 along the radial direction RD. The internal fluid-sealed structure 184 allows the other ends 180b of all cooling water pipes 180 to pass through, and the polymer material or colloid material of the internal fluid-sealed structure 184 can closely adhere to the outer periphery of the other ends 180b of the cooling water pipes 180 to prevent water leakage. The inner cooling water channel structure 160 includes two inner annular water channel walls (160a, 160b) bonded together to form an inner cooling water channel 160c therebetween. That is, the inner cooling water channel 160c is formed between the two inner annular water channel walls (160a, 160b). The inner annular water channel wall 160a closer to the stator body 110 has a plurality of concave-convex features 161 to increase the contact area between the stator body 110 and the thermoset insulating material 144 filled between the inner diameter protrusions 120i and the inner annular water channel wall 160a, thereby improving the heat exchange efficiency. In some embodiments of the present disclosure, an inner upper ring 190a of an internal connection water channel structure 190 includes a plurality of cone-shaped protruding members 191 arranged in a circular ring along a circumferential direction, and the cone-shaped tip extends upward along an axial direction AD. Each cone-shaped protruding member 191 is located between every two immediately-adjacent inner diameter protrusions 120i (referring also to Figs. 1 and 2), so that the heat exchange efficiency between the cone-shaped protruding member 191 and the inner diameter protrusions 120i can be effectively improved. Each internal connection water channel (192a or 192b) is fluidly-communicably connected between the corresponding cooling water pipes 180 and the inner cooling water channel 160c. Similarly, a plurality of cone-shaped protruding members 191 may be formed on the inner lower ring 190b and arranged in a ring shape along the circumferential direction, with the cone-shaped tips extending downward along the axial direction AD and extending into between every two adjacent inner diameter protrusions 120i.

In sum, the water-cooled stator structure of the axial flux motor disclosed herein adopts non-magnetic material that can prevent water from leaking as a cooling water pipe, which is used to connect the inner and outer cooling water channels of the stator body, so that the cooling water can directly enter the interior of the stator with a higher heat density for heat exchange. The cooling water pipe passes through the soft magnetic material of the stator and can effectively prevent the internal cooling water from leaking out or directly contacting the soft magnetic material. The inner and outer cooling water channel structures and the conductor wires (inner diameter protrusion or outer diameter protrusion) are filled with thermoset insulating materials that flow first and solidify later. In addition to being used to insulate and secure the conductor wires, the thermoset insulating materials can also dissipate the heat from by the conductor wires to the inner and outer cooling water channel structures, thereby achieving the purpose of heat dissipation. The water-cooled stator structure also includes internal and external connection water channel structures and a fluid-sealed structure connected between the internal and external cooling water channel structures and the cooling water pipe to prevent cooling water from leaking out.

## Claims

1. A water-cooled stator structure of an axial flux motor comprising:
a hollow-annular-shaped stator body(110) having a plurality of slots(110);
a plurality of conductor wires(120) passing through the slots(110) in a radial direction(RD) to form a distributed winding structure, and having a plurality of inner diameter protrusions(120i) and a plurality of outer diameter protrusions(120o), wherein the inner diameter protrusions(120i) are located in an internal space of the stator body(110), and the outer diameter protrusions(120o) are exposed outside an outer diameter sidewall of the stator body(110);
a plurality of cooling water pipes(180) made from a waterproof non-magnetic material and passing through the stator body(110) in the radial direction(RD), and being located between the internal space and the outer diameter sidewall;
an internal connection water channel structure(190) fluidly-communicably connected with the cooling water pipes(180) and having an internal fluid-sealed structure(184) contacting ends(180a) of the cooling water pipes(180);
an external connection water channel structure(170) fluidly-communicably connected with and having an external fluid-sealed structure(182) contacting the other ends(180b) of the cooling water pipes(180); and
a thermoset insulating material(144) filled among the inner diameter protrusions(120i), the outer diameter protrusions(120o), the internal connection water channel structure(190) and the external connection water channel structure(170).

2. The water-cooled stator structure of claim 1, wherein the stator body(110) is a soft magnetic material body, and the cooling water pipes(180) pass through the stator body(110) in a radial manner.

3. The water-cooled stator structure of claim 1, wherein the internal connection water channel structure(190) comprises an inner upper ring(190a) and an inner lower ring(190b) which are attached to form a plurality of radially arranged internal connection water channels(192a, 192b) to be fluidly-communicably connected with the ends(180a) of the cooling water pipes(180) respectively.

4. The water-cooled stator structure of claim 3, wherein the internal fluid-sealed structure(184) is located between the stator body(110) and the internal connection water channel structure(190).

5. The water-cooled stator structure of claim 1, wherein the external connection water channel structure(170) comprises an outer upper ring(170a) and an outer lower ring(170b) which are attached to form a plurality of radially arranged external connection water channels(171a, 171b) to be fluidly-communicably connected with the other ends(180b) of the cooling water pipes(180) respectively.

6. The water-cooled stator structure of claim 5, wherein the external fluid-sealed structure(182) is located between the stator body(110) and the external connection water channel structure(170).

7. The water-cooled stator structure of claim 1, wherein the external fluid-sealed structure(182) or the internal fluid-sealed structure(184) comprises an elastic polymer material or an elastic colloid material.

8. The water-cooled stator structure of claim 1, wherein the external connection water channel structure(170) comprises a plurality of cone-shaped protruding members(191) arranged in a circumferential direction.

9. The water-cooled stator structure of claim 8, wherein each cone-shaped protruding member(191) is located between every two immediately-adjacent ones of the inner diameter protrusions(120i).

10. The water-cooled stator structure of claim 1, further comprising:
an inner cooling water channel structure(160) located in the internal space of the stator body(110), wherein the inner diameter protrusions(120i) are located between the stator body(110) and the inner cooling water channel structure(160); and
an outer cooling water channel structure(140) surrounding the outer diameter sidewall of the stator body(110), wherein the outer diameter protrusions(120o) are located between the stator body(110) and the outer cooling water channel structure(140).

11. The water-cooled stator structure of claim 10, wherein the thermoset insulating material(144) is further filled among the stator body(110), the outer cooling water channel structure(140) and the outer diameter protrusions(120o).

12. The water-cooled stator structure of claim 10, wherein the thermoset insulating material(144) is further filled between the stator body(110), the inner cooling water channel structure(160) and the inner diameter protrusions(120i).

13. The water-cooled stator structure of claim 10, wherein the inner cooling water channel structure(160) comprises two inner annular water channel walls(160a,160b) which are attached to each other to form an inner cooling water channel(160c) between the two inner annular water channel walls(160a,160b).

14. The water-cooled stator structure of claim 13, wherein the inner annular water channel wall(160a) adjacent to the stator body(110) has a plurality of concave-convex features(161), and the thermoset insulating material(144) is filled between the stator body(110), the inner diameter protrusions(120i), the inner annular water channel wall(160a) and the concave-convex features(161).

15. The water-cooled stator structure of claim 10, wherein the outer cooling water channel structure(140) comprises two outer annular water channel walls(140a, 140b) which are attached to each other to form an outer cooling water channel(140c) between the two outer annular water channel walls(140a, 140b).
